(19) Europäisches Patentamt / European Patent Office / Office européen des brevets

(11) **EP 1 863 192 A1**

(12) **EUROPEAN PATENT APPLICATION**
published in accordance with Art. 158(3) EPC

(43) Date of publication:
**05.12.2007 Bulletin 2007/49**

(51) Int Cl.:
**H04B 7/06** *(2006.01)*          **H04J 15/00** *(2006.01)*

(21) Application number: **06730298.4**

(22) Date of filing: **28.03.2006**

(86) International application number:
**PCT/JP2006/306350**

(87) International publication number:
**WO 2006/106693 (12.10.2006 Gazette 2006/41)**

(84) Designated Contracting States:
**DE FR GB**

(30) Priority: **30.03.2005 CN 200510062911**

(71) Applicant: **MATSUSHITA ELECTRIC INDUSTRIAL CO., LTD.**
**Osaka 571-8501 (JP)**

(72) Inventors:
• **ZHAO, Zheng**
**Panasonic R&D Center China Co. Ltd**
**Haidan District Beijing**
**P.R. China 100080 (CN)**

• **LI, Jifeng**
**Matsushita Electric Industrial Co. Ltd**
**2-1-61 Shiromi, Chuo-ku**
**Osaka 540-6207 (JP)**

(74) Representative: **Grünecker, Kinkeldey, Stockmair & Schwanhäusser**
**Anwaltssozietät**
**Maximilianstrasse 58**
**80538 München (DE)**

(54) **LIMITATION FEEDBACK METHOD FOR MULTIANTENNA SYSTEM, CHANNEL PARAMETER GENERATING METHOD, AND WIRELESS RECEIVER**

(57) A channel parameter generating method realizing limited feedback of aMIMO system. In this method, a channel parameter of a MIMO channel fed from a wireless receiver back to a wireless transmitter is generated. Channel estimation is carried out by using a signal received through a MIMO channel, the ranks of the space domain correlation matrix and the time domain correlation matrix of the MIMO channel are derived from the channel matrix obtained by the channel estimation, an operation to decrease the number of dimensions of the column of the estimated channel matrix is carried out if the rank of the derived space domain correlation matrix is smaller than that of the derived time domain correlation matrix, thereby a channel parameter is obtained, an operation to decrease the number of dimensions of the row of the estimated channel matrix is carried out if the rank of the derived time domain correlation matrix is smaller than that of the derived space domain correlation matrix, and a channel parameter is obtained.

FIG.5

**Description**

Technical Field

The present invention relates to a limited feedback technique for a multi-antenna code division multiple access (CDMA) wireless communication system. To be more specific, the present invention relates to a limited feedback method for a multi-antenna system, a channel parameter generation method, and a radio receiving apparatus that are applied to high-speed wireless communication systems and high-throughput wireless LAN systems of various cellular schemes, particularly to various communication systems employing a 3GPP TXAA scheme.

Background Art

In a multiple-input multiple-output (MIMO) system, a plurality of antennas are employed on the transmitting side and the receiving side, and it is possible to efficiently improve the transmission rate, counteract various selective fading and support communication in a case of multiple users. As is clear from great amounts of research results (for example, see Non-Patent Document 1), a MIMO system is a 3G or 4G cellular communication system and is highly potential for realizing high-speed transmission in a fixed wireless access system and wireless LAN system.

In a closed-loop MIMO communication system, by adjusting the transmission waveform using channel status information (CSI) on the transmitting side, the interference that is received by the intended user from other users in the cell is decreased, and the loss in performance caused by inter-symbol crosstalk is reduced. Further, the MIMO communication system counteracts frequency selective fading and efficiently improves system capacity. Furthermore, at the base station, it is possible to realize scheduling between users based on known channel information, efficiently assign resources and provide a higher throughput rate to the system. For these reasons, 3GPP (3G Partnership Project) has defined a closed loop diversity scheme in the MIMO system (for example, see Non-Patent Document 2).

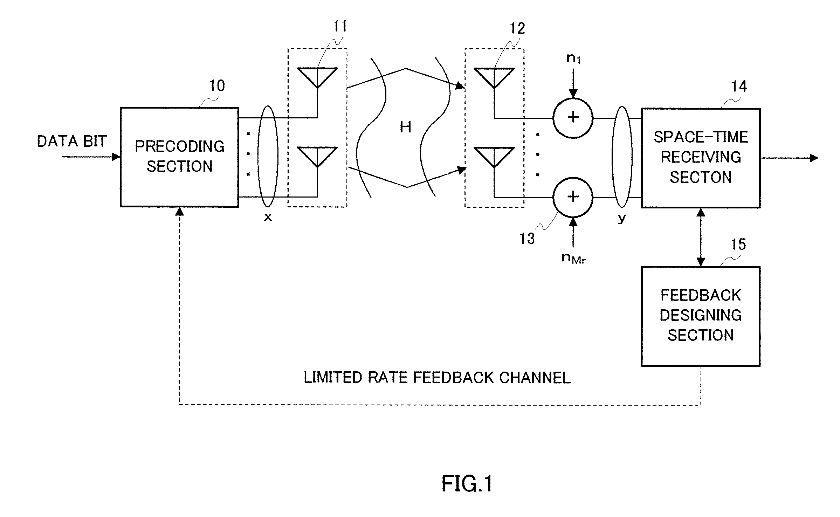

As shown in the block diagram of FIG.1, typically after the user CSI is quantized on the receiving side, the quantized CSI is transmitted from the receiving side to the transmitting side by a limited rate feedback channel. In FIG. 1, the data bit is inputted to precoding section 10 on the transmitting side, precoded and transmitted from transmitting antenna 11. On the receiving side, a radio signal is received at receiving antenna 12, and here, additional noise occurs (see reference numeral 13 of FIG.1). Then, this signal is inputted to space-time receiving section 14, and the next processing is carried out. Feedback designing section 15, based on the signal outputted from space-time receiving section 14, designs feedback parameters according to the specific application and transmits the parameters to the transmitting side through a limited rate feedback channel.

In an actual system, a control channel is capable of transmitting several channel parameters. However, in a multi-antenna system, channel parameters double in proportion to the product of the number of transmitting antennas and the number of receiving antennas. For example, when one system has four receiving antennas and four transmitting antennas, it is necessary to transmit sixteen channel parameters for each feedback in a flat fading channel. This is sixteen times the channel parameters of a SISO system, and significantly increases frequency band resources required for feedback. To save limited radio frequency band resources, before the channel parameters are fed back, it is necessary to perform limited feedback processing on the channel parameters of a closed loop MIMO system (see Non-Patent Document 3, for example).

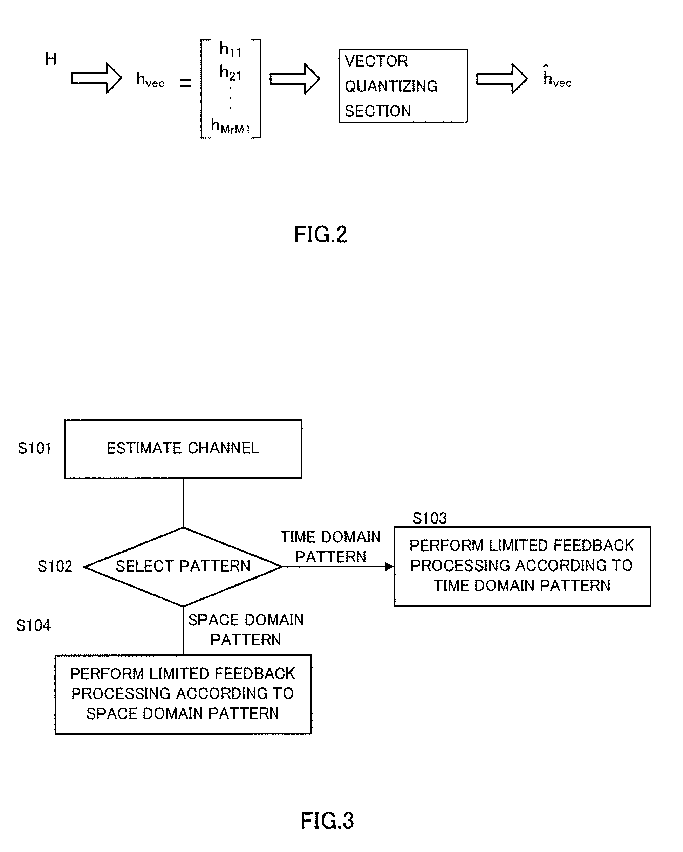

Limited feedback can be realized by a vector quantization method. FIG.2 shows channel quantization. Here, H is a radio channel matrix of a MIMO system in a flat fading environment. Element $h_{ij}$ on i-th row and j-th column indicates the channel fading from i-th transmitting antenna to j-th receiving antenna. When vector quantization is carried out, columns are combined as a single long vector, and vector quantization is performed on the vector. The main difference between channel vector quantization and compression vector quantization is the cost function. Ordinarily, as the standard for vector quantization, it is required that a mean square error (MSE) of an input vector and output vector is a minimum. In the case of channel quantization, it is required that channel characteristics are sufficiently utilized. Even after quantization is carried out according to the MSE standard, the channel still keeps these characteristics.

Channel vector quantization realizes limited feedback only from the viewpoint of a channel. Upon realizing limited feedback, the characteristics of a transmission sequence are also taken into consideration. Based on the characteristics of the transmission sequence, a code set of the precoding matrix is designed. Then, based on a radio channel matrix, the optimum precoding matrix is selected, and its matrix number is fed back to the transmitting side. Such a method is referred to as a "quantized signal adaptation method". In this method, one selection function f is defined, the precoding matrix is F=f(H), and function f maps H on code set CS of the precoding matrix. CS is expressed by following equation 1.

[1]

$$\Re = \{\mathbf{F}_{1,}, F_2, ..., F_N\} \quad \text{... (Equation 1)}$$

CS includes all possible precoding matrices. N in above equation 1 can be indicated using B bits, and the selected precoding matrix is fed back to the transmitting side using B bits. Such a limited feedback technique is applied to a beamforming system (for example, see Non-Patent Documents 4 and 5), a space-time block coding system (for example, see Non-Patent Document 6) and a spatial multiplexing system (for example, see Non-Patent Document 7). The precoding matrix set (that is, code set) is influenced by elements of various factors such as subspace measure, H distribution characteristics and the selection matrix, and therefore its design is relatively complicated.

Low rank spatial mapping can efficiently overcome problems of the complexity of the quantized signal adaptation method. Thus, the rows and columns of a channel matrix are mapped in low-rank space, and the channel content is indicated using less parameters. For a beamforming system, correlation matrices $F_n$ are developed based on Mx1 vectors $f_n$ having rank 1. Here, M is the number of transmitting antennas. When $f_n$ is the subspace of D dimensions and D≤M, $f_n$ may be expressed as $f_n$, $= P_n \alpha_n$. $P_n$ is a single M×D dimensional matrix, and columns thereof are developed in one D dimensional space. $\alpha_n$ is one D×1 dimensional column vector. It is necessary on the receiving side to obtain the solution of D×1 dimensional vector $\alpha_n$, and, after the solution is quantized, the solution is fed back to the transmitting side.

With respect to a CDMA system, Non-Patent Document 8 studied problems regarding low-rank spatial mapping of characteristic waveforms, and spreads a limited feedback method in the case of multiple uplink users. On the receiving side, according to a given standard, for example, the minimummean square error (MMSE) of energy constraints, a characteristic waveform having an even lower number of dimensions, that is, $\alpha_n$ is determined. This method determines matrix $P_n$ that artificially reduces the number of dimensions in advance, before obtaining optimum $\alpha_n$. An example is as follows:

[2]

$$\mathbf{P}_n = \begin{bmatrix} -0.5 & 0 \\ -0.5 & 0 \\ 0 & -0.5 \\ 0 & 0.5 \end{bmatrix} \quad \text{... (Equation 2)}$$

This $P_n$ changes a single four-dimensional vector to a single two-dimensional vector. There is no relationship between $P_n$ and characteristic waveform $f_n$. As a result of this, the configuration of the characteristic waveform is artificially constrained, the optimum solution obtained after adaptive adjustment is obtained as the result of the artificial constraint, and the characteristic waveform having a reduced rank is artificially distorted.

The rank reduction algorithm in a MIMO system is studied (for example, see Non-Patent Document 9). However, it is necessary to perform eigenvalue decomposition on the channel matrix. Therefore, when the number of dimensions of the channel matrix is relatively high or the number of users is relatively large, it is difficult to bear the complexity of such eigenvalue decomposition. When the number of identifiable multipaths is relatively large, the algorithm cannot realize rank reduction.

Non-Patent Document 1: T. S. Rappaport, A. Annamalai, R. M. Buehrer, and W. H. Tranter, "Wireless communications: past events and a future perspective," IEEE Commun. Mag., Vol. 40, No. 5, Part: Anniversary, pp. 148 -161, May 2002.

Non-Patent Document 2: R. Thomas Derryberry, Steven D. Gray, D. Mihai Ionescu, Giridhar Mandyam, Balaji Raghothaman, "Transmit Diversity in 3G CDMA Systems, "IEEE Commun. Mag., Vol. 40, Apr. 2002, pp. 68-75.

Non-Patent Document 3: David. J. Love, Robert. W. Heath, Jr., W. Santipach, and Michael. L. Honig, "What is the value of limited feedback for MIMO channels, " IEEE Commun. Mag., Vol. 42, No. 1, Oct. 2004, pp. 54-59.

Non-Patent Document 4: David. J. Love, Robert. W. Heath, Jr., and T. Strohmer, "Grassmannian Beamforming for Multiple-Input Multiple-Output Wireless Systems," IEEE Trans. Info. Theory, Vol. 49, Oct. 2003, pp. 2735-45.

Non-Patent Document 5: Krishna Kiran. Mukkavilli, Ashutosh Sabharwal, Elza Erkip, Behnaam Aazhang, "On Beam forming with Finite Rate Feedback in Multiple-Antenna Systems," IEEE Trans. Info. Theory, Vol. 49, Oct. 2003, pp. 2562-79.

Non-Patent Document 6: D. J. Love and R. W. Heath, Jr., "Limited Feedback Unitary Precoding for Orthogonal Space-Time Block Codes," to appear, IEEE Trans. Signal Processing. Downloaded from http://dynamo.ecn.purdue.edu/-djlove/papers/paper4.p df

Non-Patent Document 7: D. J. Love and R. W. Heath, Jr., "Grassmannian Precoding for Spatial Multiplexing Systems," Proc. Allerton Conf. Commun., Control, and Comp., Monticello, IL, Oct. 2003.
Non-Patent Document 8: G. S. Rajappan and M. L. Honig, "Signature Sequence Adaptation for DS-CDMA with Multipath," IEEE JSAC, Vol. 20, Feb. 2002, pp. 84-95.
Non-Patent Document 9: Monica Nicoli, Mikael Sternad, Umberto Spagnolini, and Anders Ahlen, "Reduced-rank Channel Estimation and Tracking in Time-Slotted CDMA System," Proc. Of ICC, 2002, pp. 533-537.
Non-Patent Document 10: S. Jeng, G. T. Okamoto, G.uanghan Xu, Hui. Liu, J. Vogel, "Experimental evaluation of smart antenna systems for wireless communications, "IEEE trans. on AP, Vol. 46, No. 6, pp. 749-757, 1998.
Non-Patent Document 11: J. Anderson, S. Rappaport, S. Yoshida,"Propagation measurements and model for wireless communications," IEEE Comm. Magazine, Vol. 33, No. 1, pp. 42-49, 1995.

Disclosure of the Invention

To overcome the problem that the channel feedback information in a closed loop multi-antenna CDMA system occupies an excessive amount of resources, the present invention discloses a multi-identification limited feedback method, channel parameter generation method and radio receiving apparatus. This method and apparatus realize limited feedback of a multi-antenna CDMA system by using the low-rank characteristics of the channel fading between antennas of the multi-antenna system. Further, by using an estimated channel matrix, the corresponding space domain correlation matrix and time domain correlation matrix are calculated, and, based on the rank of the space domain correlation matrix and the rank of the time domain correlation matrix, it is determined whether a space domain pattern or a time domain pattern is used in limited feedback processing. Further, based on the space domain multi-identification characteristics of the channel matrix or the multi-identification characteristics of the spread code, wavelet transform (WT) is used, multi-identification filtering is performed on the channel matrix, the number of channel dimensions is reduced, the main content of the channel matrix using limited channel parameters are indicated, and the final result is fed back to the transmitting side.

A limited feedback method of a multi-antenna system according to a first aspect of the present invention includes: a step of estimating a channel matrix from a received signal; a step of calculating a space domain correlation matrix of a channel and a rank of the space domain correlation matrix based on the channel matrix; a step of calculating a time domain correlation matrix of the channel and a rank of the time domain correlation matrix based on the channel matrix; a step of acquiring limited feedback output by performing wavelet transform on columns of the channel matrix when the rank of the space domain correlation matrix is lower than the rank of the time domain correlation matrix; and a step of acquiring limited feedback output by performing wavelet transform on rows of the channel matrix when the rank of the space domain correlation matrix is higher than the rank of the time domain correlation matrix.

According to another embodiment of the present invention, a channel parameter generation method of generating channel parameters of a multi-input multi-output channel fed back from a radio receiving apparatus to a radio transmitting apparatus, includes: a step of performing channel estimation using a signal received through the channel; a step of deriving ranks of a space domain correlation matrix and a time domain correlation matrix of the channel from a channel matrix obtained by the channel estimation; a step of obtaining the channel parameters by performing an operation of reducing a number of dimensions of columns of the estimated channel matrix when the derived rank of the space domain correlation matrix is lower than the derived rank of the time domain correlation matrix; and a step of obtaining the channel parameters by performing an operation of reducing a number of dimensions of rows of the estimated channel matrix when the derived rank of the time domain correlation matrix is lower than the derived rank of the space domain correlation matrix.

Further, according to another embodiment of the present invention, a radio receiving apparatus that generates channel parameters of a multi-input multi-output channel fed back to a radio transmitting apparatus, employs a configuration including: an estimating section that performs channel estimation using a signal received through the channel; a deriving section that derives ranks of a space domain correlation matrix and a time domain correlation matrix of the channel from a channel matrix obtained by the channel estimation; and a calculating section that obtains the channel parameters by performing an operation of reducing a number of dimensions of columns of the estimated channel matrix when the derived rank of the space domain correlation matrix is lower than the derived rank of the time domain correlation matrix, and by performing an operation of reducing a number of dimensions of rows of the estimated channel matrix when the derived rank of the time domain correlation matrix is lower than the derived rank of the space domain correlation matrix.

The present invention utilizes the MIMO channel low-rank characteristics based on array characteristics, radio transmission channel characteristics and characteristics of the spread code, and performs processing on a channel matrix using a multi-identification filter. Further, by acquiring a multi-identification channel impulse response, limited feedback transmission of channel information is realized. Further, based on the channel characteristics, low-rank mapping processing is carried out, main components of a signal are kept, and channel distortion caused by artificial prefiltering is overcome. Here, this effect is based on the characteristics that, when a Mallat filter is used, the amount of operations becomes small.

Brief Description of Drawings

FIG.1 shows a limited feedback MIMO system;

FIG.2 shows the principle of channel vector quantization;

FIG.3 is a flowchart showing the entire limited feedback method of the present invention;

FIG.4 shows a configuration of a transmission sequence frame;

FIG.5 is a flowchart showing realization of pattern selection;

FIG.6 shows the different angle spaces corresponding to the different sub-beam areas;

FIG.7A shows a case where different space sampling intervals (close to the normal direction) are used for signals having different directions of arrival and the same array component phase differences;

FIG.7B shows the case where different space sampling intervals (close to the array component direction) are used for signals having different directions of arrival and the same array component phase differences;

FIG.8 is a flowchart showing the case where only one-dimensional wavelet transform is carried out that realizes limited feedback based on a space domain pattern;

FIG.9 is a flowchart showing the case where only one-dimensional wavelet transform is carried out that realizes limited feedback based on a time domain pattern;

FIG.10 is a performance curve of multi-identification limited feedback of different angle spreads; and

FIG.11 is a performance curve of multi-identification limited feedback in a case of different numbers of multipaths.

Best Mode for Carrying Out the Invention

An embodiment of the present invention includes three major steps. As shown in FIG.3, first, channel estimation is carried out in the first step (step S101). Next, in the second step, it is determined which pattern is used for limited feedback processing, using the estimated channel (step S102). Next, in the third step, limited feedback processing is carried out according to a pattern of the space domain or time domain based on the pattern selection result (step S103 or S104).

When a code division multiple access (CDMA) system has M receiving antennas and K transmitting antennas, k-th discrete space-time channel pattern $H_k(t)$ of the transmitting antennas is obtained after sampling according to the chip rate. The radio channel may also be regarded as superimposed and formed by P multi-paths, and, when $u_{k,p}$ is the direction of arrival of a p-th multi-path, $\tau_{k,p}$ is the delay, and $\alpha_{k,p}(t)$ is multi-fading, discrete space-time channel $H_k(t)$ may be expressed by following equation 3.

[3]

$$\mathbf{H}_k(t) = \sum_{p=1}^{P_k} \alpha_{k,p}(t)\mathbf{a}(\mathbf{v}_{k,p})\mathbf{g}(\tau_{k,p})^T \quad \cdots (\text{Equation } 3)$$

The number of dimensions is M×W, W is equivalent to the number of time samples of the code. Further, g $(\tau_{k,p})^\tau$ is the row vector of 1×W dimensions, and indicates the characteristic waveform after the $\tau_{k,p}$ delay. Further, a $(u_{k,p})$ indicates the space domain characteristics of a signal, and is an M×1 dimensional steering vector.

<Channel estimation>

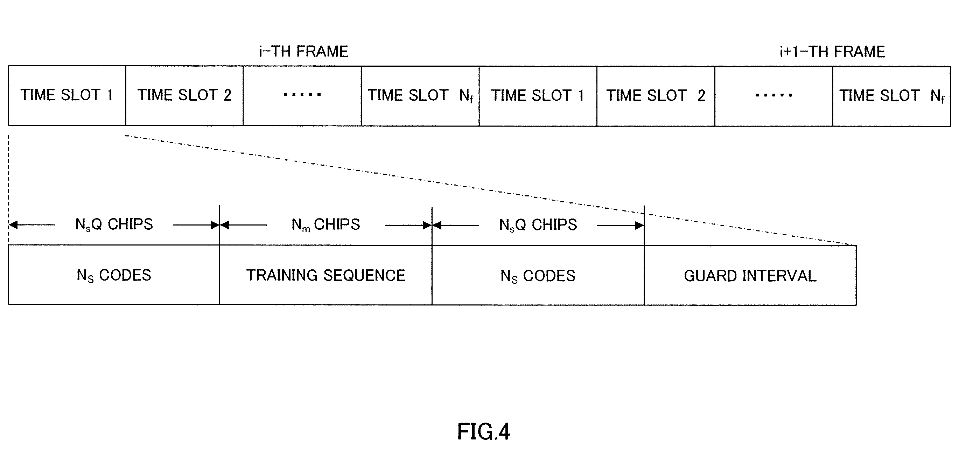

Before carrying out limited feedback, it is necessary to carry out channel estimation. In L continuous slots, it is assumed that the directions of arrival and delay of paths are constant. The channel fading between the different slots are independent of each other due to user mobility. FIG.4 shows a configuration of a signal frame. Here, frames are comprised of $N_f$ slots. Slots are comprised of $N_s$ transmission codes, a training sequence, $N_s$ transmission codes and a guard interval, in that order. Length $N_m$ of the training sequence must be greater than the number of time domain dimensions of the channel.

The accuracy of estimation can be improved using the channel estimation obtained from a plurality of slots. Further, estimation may be carried out on $H_k(t)$ using the signal in one slot. In an 1-th (where 1=1, 2, ..., L) slot, channel pattern $H_k(1)$ is constant, the training sequence is one W×N Toeplitz matrix $X_k$, and the product of $H_k(1)$ and $X_k$ indicates convolution of the channel and training sequence. When the received signal of the 1-th (where 1=1, 2, ..., L) slot is indicated by Y (1), Y (1) is one MxN matrix and has N sample signals. The channel matrix of a plurality of transmitting antennas is H(l)=[H₁(1) ...H_k(l)], and X=[X^T₁ ... X^T_K]^T has a Toeplitz matrix comprised of a training sequence of K transmitting antennas. In the 1-th slot, the received signal can be expressed by following equation 4:
[4]

$$\mathbf{Y}(l) = \sum_{k=1}^{K} \mathbf{H}_k(l)\mathbf{X}_k + \mathbf{N}(l) = \mathbf{H}(l)\mathbf{X} + \mathbf{N}(l) \quad \dots (\text{Equation 4})$$

Here, $N(l)=[n_1(l) \dots n_1(N)]$ is the received noise interference signal. It is assumed that the noise signal is not correlated with the time domain, and the noise distributions received at antennas are independent of each other. In full rank estimation of channel matrix H(l), a least square method may be used, and an estimation value of the channel matrix is obtained by correlating the reception matrix with the training sequence. This is expressed by following equation 5.
[5]

$$\hat{\mathbf{H}}(l) = \mathbf{Y}(l)\mathbf{X}^H(\mathbf{X}\mathbf{X}^H)^{-1} \quad \dots (\text{Equation 5})$$

<Pattern selection>

When $R_{k,s}=E_\alpha[H_k(t) H_k(t)^H]$ indicates the space domain correlation matrix of the channel, rank $r_{k,s}$ corresponds to the number of identifiable multi-paths having different directions of arrival. Further, when $R_{k,t}=E_\alpha[H_k(t)^H H_k(t)]$ indicates the time domain correlation matrix of the channel, rank $r_{k,t}$ corresponds to the number of identifiable multi-paths having different delays. Column vectors of channel matrix $H_k(t)$ belong to the space developed by the main eigenvectors of $R_{k,s}$ and $r_{k,s}$. Row vectors belong to the space developed by the main eigenvectors of $R_{k,t}$ and $r_{k,t}$.
In rank reduction processing, $H_k(t)$ is mapped on the space corresponding to the main eigenvector components of the space domain or time domain, one rank reduced pattern is obtained, and that rank is $r_k=\min(r_{k,s}, r_{k,t}) <\min(M, W)$. The rank reduced pattern can be expressed in the format of the product of space domain component $M \times r_k$ dimensional matrix $A_k(t)$ and time domain component $r_k \times W$ dimensional matrix $B_k(t)$. As is clear from Non-Patent Document 9, the change in delay and direction of arrival is relatively slow among the parameters of the multi-path signal, and these states may be regarded as constant in L slots. However, the change in multi-path fading is relatively fast and is different for each slot, and fading in slots is independent of each other. Here, the space domain pattern and time domain pattern are expressed by following equations 6 and 7, respectively.
[6]

$$\mathbf{H}_k(t) = \mathbf{A}_k \mathbf{B}_k(t)^H \quad \cdots (\text{Equation 6})$$

[7]

$$\mathbf{H}_k(t) = \mathbf{A}_k(t)\mathbf{B}_k^H \quad \cdots (\text{Equation 7})$$

When the number of identifiable multi-paths based on angle is smaller than the number of identifiable multi-paths based on delay, that is, when $r_{k,s}<r_{k,t}$, in order to efficiently indicate a channel matrix, a space domain pattern should be used upon limited feedback. When $r_{k,s}>r_{k,t}$, a time domain pattern should be used. In a multi-antenna system, when there is no angle spread, the channel rank is 1, and the channel may be expressed by following equation 8.
[8]

$$\mathbf{H}_k(t) = \mathbf{a}_k \mathbf{b}_k(t)^H \quad \dots (\text{Equation 8})$$

Here, $b_k(t)$ indicates the time domain characteristics of the channel. $b_k(t)$ is expressed by following equation 9.

[9]

$$\mathbf{b}_k(t)^H = \sum_{p=1}^{P} \alpha_{k,p}(t)\mathbf{g}(\tau_{k,p})^T \qquad \dots (\text{Equation } 9)$$

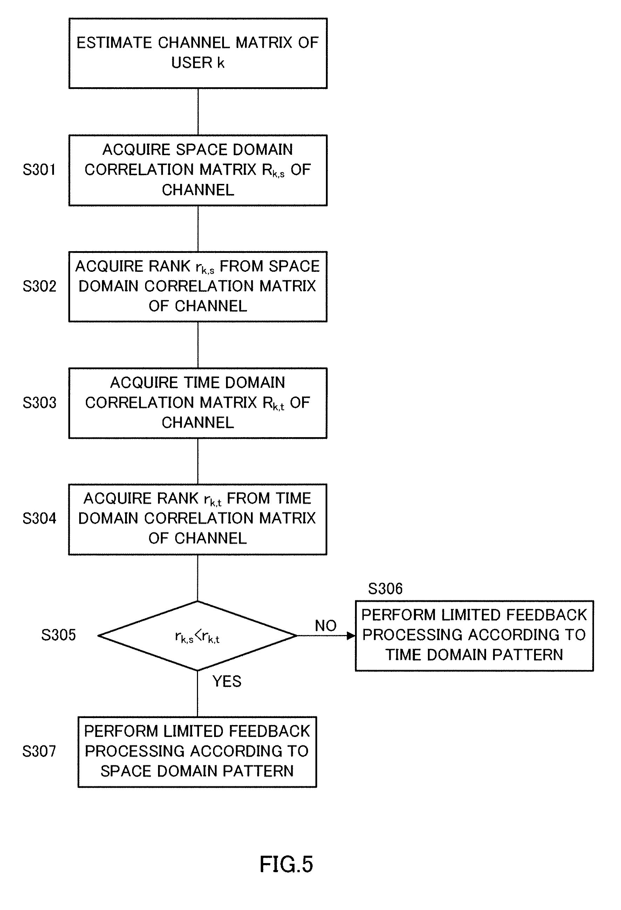

FIG.5 is a flowchart showing pattern selection. First, on the receiving side, k-th channel matrix of the user is estimated based on the received signal. Next, in step S301, channel space domain correlation matrix $R_{k,s}$ is obtained using the estimated channel matrix. Next, in step S302, rank $r_{k,s}$ of channel space domain correlation matrix $R_{k,s}$ is obtained.

Similarly, in step S303 and step S304, time domain correlation matrix $R_{k,t}$ and its rank $r_{k,t}$ are respectively obtained. In step S305, the levels of the above two ranks are determined. When rank $r_{k,t}$ of the time domain correlation matrix is lower than rank $r_{k,s}$ of the space domain matrix (S305: No), limited feedback processing is carried out according to the time domain pattern in step S306. When rank $r_{k,t}$ of the time domain correlation matrix is higher than rank $r_{k,s}$ of the space domain matrix (S305: Yes), limited feedback processing is carried out according to the space domain in step S307.

For a wireless communication system installed in a broad area, there are relatively few scatterers, and the angle spread is small, ordinarily less than 20 degrees (Non-Patent Documents 10 and 11). Thus, the number of identifiable multi-paths of the channel pattern space domain is relatively small, and it is appropriate to carry out limited feedback processing using the space domain pattern. However, for a communication system in a microcellular environment, there is a relatively large number of scatterers near the transmitting side and receiving side, and the channel angle spread is relatively large. Further, the distance between the transmitting side and receiving side is relatively close, has a relatively small time delay spread and is ordinarily between 10 and 100ns. Thus, the number of identifiable multipaths in the time domain is relatively small, and limited feedback processing should be carried out using the time domain pattern. Further, for a CDMA system, the number of identifiable multipaths of the time domain pattern relates to the spread code. A case will be described where a spread code having a spreading factor of 4 is taken as an example. The signal of spread code (1, 1, 1, 1) is constant in one code period and is opposite to other spread codes. The signal is a single low-frequency signal, and has relatively low time identification rate, and therefore the number of identifiable multipaths having different delays is also relatively small.

<Limited feedback processing based on space domain pattern>

For a space domain pattern, the number of identifiable multipaths is limited by the number of array dimensions, and the space domain main eigenvectors of the channel pattern are likely to be greater than the number of space domain dimensions of the channel pattern, and therefore efficient rank reduction processing cannot be carried out. Further, the number of identifiable multipaths in the time domain (multipaths having delays different from the identifiable multipaths in the time domain) is much larger than the number of identifiable multipaths in the space domain (multipaths having directions of arrival different from the identifiable multipaths in the space domain), and therefore efficient low-rank mapping cannot be realized using the time domain pattern. On the other hand, the directions of arrival of path signals are not dispersed, but are a flux having a continual direction of arrival, and therefore channel characteristics cannot be indicated using a plurality of discrete main components.

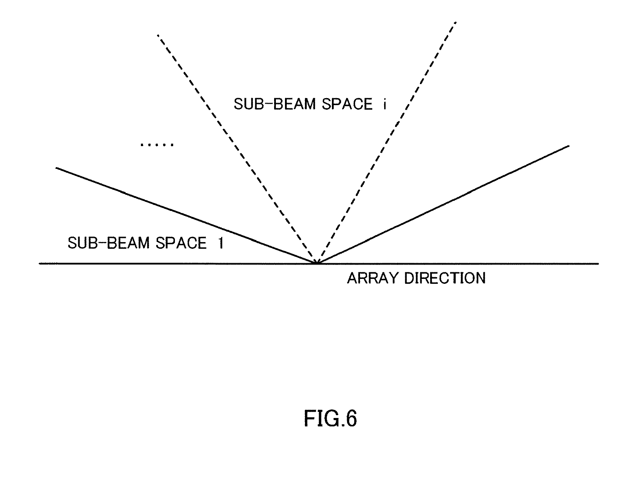

In order to solve this problem, low-rank mapping processing is carried out on the channel in units of the angle space comprised of the flux. That is, by using the characteristics of multi-identification of wavelet transform and applying wavelet transform to the space domain channel waveform, a channel waveform in the multi-identification beam space is acquired. As shown in FIG.6, the sub-beam space corresponds to different physical angle spaces, respectively, and includes several maineigenvectors. Multi-identificationreferstousing different space sampling intervals for channel waveforms in the different sub-beam space based on different directions of arrival. For each sub-beam space, the number of dimensions of the channel waveform is smaller than the number of array dimensions. By using Wavelet transform, extracting main fluxes and reducing the number of channel parameters, limited feedback transmission of the channel matrix is realized.

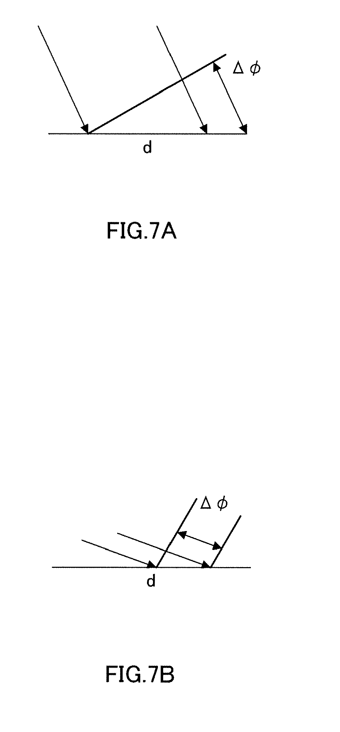

As shown in FIG.7A and FIG.7B, an array antenna is a uniform linear array having M array elements, the distance between two adjacent array elements is d, and the direction of arrival of the plane wave signal is $\theta$ (with respect to the normal direction). For a single uniform linear array, the phase difference of the received signals of two adjacent array elements is $\Delta\Phi = kd\sin\theta$, where k is equivalent to $2\pi/\lambda$, and $\lambda$ is the signal wavelength. Basically, the phase characteristics determine the rate at which the signal oscillates along the array antenna. For a signal near the normal direction ($\theta \doteq 0$), the phase difference $kd\sin\theta$ between the adjacent array elements is close to 0 and the signal slowly oscillates along the array, so that it is possible to correspond to a relatively long distance between array elements using a relatively large space sampling interval Conversely, when the incidence source is close to the array direction, at this time $\theta \fallingdotseq \pi/2$, and the signal oscillates at high-speed along the array, it is required to be observed using relatively small scaling.

As is clear from the above study, the space sampling interval and direction of arrival have a close relationship. The distance between array elements may be set even larger for incoming waves from some directions. Thus, when the array aperture is constant, the number of space sampling points may be decreased. Thus, it is possible to realize rank reduction using multi-identification space sampling techniques.

Multi-rate space domain resampling may be carried out on a signal based on different directions of arrival using wavelet transform. Wavelet transform is carried out on each column of channel matrix $H_k(t)$, and output wavelet coefficient $c(t)$ and scaling coefficient $d(t)$ are obtained. These are expressed by following equation 10.

[10]

$$[\mathbf{c}(t), \mathbf{d}(t)] = \mathrm{dwt}[\mathbf{H}_k(t)] \quad \ldots (\mathrm{Equation}\ 10)$$

Here, dwt[.] is dyadic wavelet transform. The scaling coefficient and wavelet coefficient correspond to angle spaces of different directions, and the number of dimensions is smaller than the number of dimensions of the column vector of the channel. Next, the correlation of the scaling coefficient and the correlation of the wavelet coefficient are calculated, and the degree of correlation is determined. When the correlation of the wavelet coefficient is higher than the correlation of the scaling coefficient, the wavelet coefficient is fed back to the transmitting side. When the correlation of the wavelet coefficient is not higher than the correlation of the scaling coefficient, the scaling coefficient is fed back to the transmitting side. When the bandwidth of the feedback channel is extremely limited, wavelet transform may be further carried out on the wavelet transform result. Every time wavelet transform is performed, the channel parameters are decreased, and channel information is lost. After wavelet transform is carried out a plurality of times, the entire space domain is divided into several angular subspaces. As shown in FIG.4, angular subspaces correspond to responses from multipath of different directions, have the different number of dimensions, are determined by the space sampling interval, and are smaller than the number of rows of initial channel pattern $H_k(t)$. Furthermore, the number of times of wavelet transform may be determined based on the number of given feedback parameters, the allowed channel error and a ratio between the feedback parameter and residual energy.

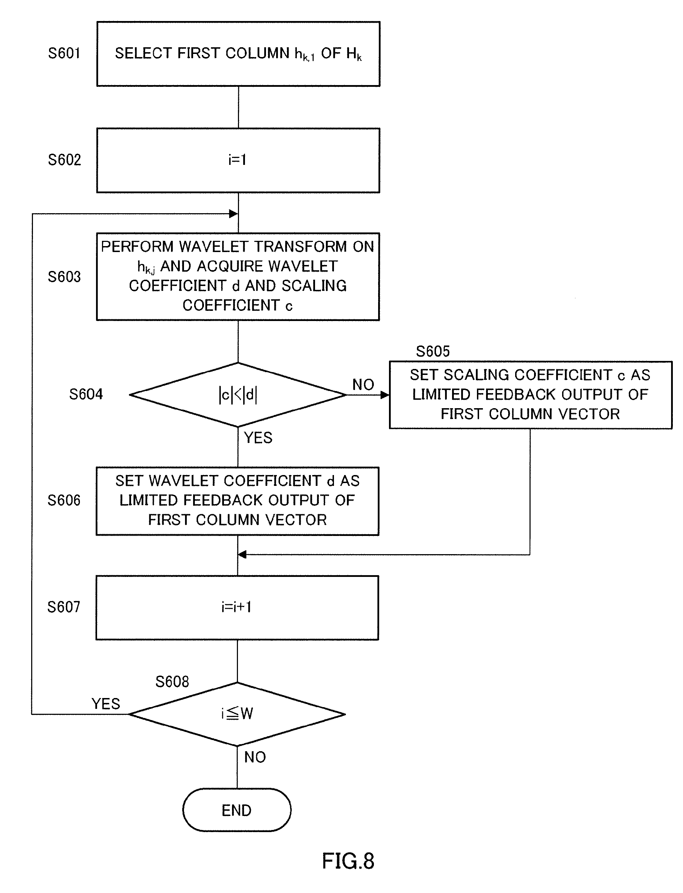

In FIG.8, first, in step S601, $h_{k,1}$ in first column of channel matrix $H_k$ is selected. Next, in step S602, it is assumed that i=1. Next, in step S603, wavelet transform is carried out on $h_{k,i}$ in i-th column of channel matrix $H_k$, and wavelet coefficient d, scaling coefficient c, and energy |d| and |c| are acquired. Next, in step S604, the levels of |d| and |c| are determined.

When |d| is smaller than |c| (S604: No), in step S605, scaling coefficient c is set as the limited feedback output of the first column vector, and the flow subsequently proceeds to step S607. When |d| is greater than |c| (S604: yes), in step S606, wavelet coefficient d is selected and set as the limited feedback output of the first column vector, and the flow subsequently proceeds to step S607.

In step S607, 1 is added to i, and, in step S608, it is determined whether i is equal to or less than W. Here, W is the number of columns of channel matrix $H_k$. When i is equal to or less than W (S608: Yes), the flow returns to step S603, and processing is carried out on the next column. When i is greater than W (S608: No), that is, when the processing of all columns is completed, the process ends.

In this way, based on the space domain multi-identification characteristics of the channel matrix, multi-identification filtering is performed on the channel matrix using wavelet transform, the number of channel dimensions is reduced, the main content of the channel matrix is indicated using limited channel parameters, and the final result is fed back to the transmitting side.

<Feedback processing based on time domain pattern>

For some CDMA systems, the time domain characteristic waveform of a channel similarly has multi-identification characteristics, and these characteristics are mainly determined by the characteristics of the spread code. As is evident, the Walsh code is the spread code most often used in a CDMA system. This is developed according to the matrix expressed by following equation 11.

[11]

$$\mathbf{C} = \begin{bmatrix} 1 & 1 \\ 1 & -1 \end{bmatrix}$$

$$\cdots (\text{Equation } 11)$$

As is clear from the above equation, the two row vectors of matrix C are the wavelet function and scaling function of a Haar wavelet. Transform is performed on each code of the Walsh code using the Haar wavelet. One of the obtained wavelet coefficient and scaling coefficient will always be zero. As is clearly understood from wavelet theory, different spread codes have different time frequency identification rates. Thus, the sampling intervals required for the time domain characteristic waveforms of different spread codes are different.

This problem will be described using a Walsh code having a spread factor of 8 as an example. This example is comprised of the three Walsh codes a=(1, 1, 1, 1, 1, 1, 1, 1), b= (1, 1, -1, -1, 1, 1, -1, -1), and c= (1, -1, 1, -1, 1, -1, 1, -1), where each has a different change rate and different required sampling interval. The change rate of c is the fastest. Further, the sampling rate required by c is the highest, and it is necessary to carry out sampling according to the chip rate. The change rate of b is the second highest. a is constant in one code period, and has relatively high redundancy when sampling is carried out according to the chip rate. Further, in a similar radio environment, the different spread codes have different time frequency identification rates, and have the different degrees of sensitivity with respect to the multipath delay. Further, the time domain characteristic waveforms each have a different number of identifiable multipaths.

Ordinarily, when time domain discretization is performed on user channel characteristics, the characteristic waveforms of the different spread codes use the same sampling interval, thereby causing relatively high redundancy for part of spread codes, and therefore feedback channel resources are wasted. When wavelet transform is used, it is possible to perform processing on the time domain channel impulse response of each antenna and obtain multi-identification output. Further, based on the different spread codes, by using different sample intervals, redundancy in discrete channel parameters is reduced, and efficiency of channel feedback transmission is improved. Further, in the feedback processing based on the time domain pattern, as in the limited feedback processing based on the space domain pattern, when the bandwidth of the feedback channel is extremely limited, wavelet transform may be further performed on the wavelet transform result. Furthermore, the number of times of wavelet transform can be determined based on the characteristics of the code division multiple access system spread code and the number of possible multipaths in the cell.

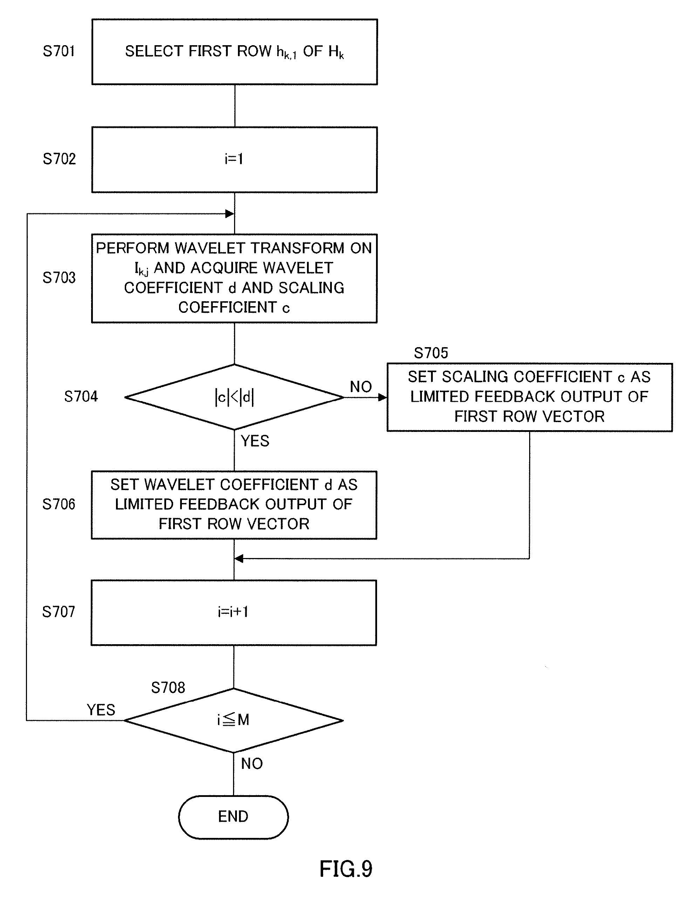

FIG.9 is a flowchart illustrating the limited feedback processing of a time domain pattern. In FIG.9, first, in step S701, $l_{k,1}$ in the first row of channel matrix $H_k$ is selected. Next, in step S702, it is assumed that i=1. Next, in step S703, by performing wavelet transform on $l_{k,i}$ in i-th column of channel matrix $H_k$, wavelet coefficient d, scaling coefficient c, and energy |d| and |c| are acquired. Next, in step S704, the levels of |d| and |c| are determined.

When |d| is smaller than |c| (S704: No), in step S705, scaling coefficient c is set as the limited feedback output of the first row vector, and the flow subsequently proceeds to step S707. When |d| is greater than |c| (S704: yes), in step S706, wavelet coefficient d is selected and set as the limited feedback output of the first row vector, and the flow subsequently proceeds to step S707.

In step S707, 1 is added to i. Next, in step S708, it is determined whether or not i is equal to or less than M. Here, M is the number of rows of channel matrix $H_k$. When i is equal to or less than M (S708: Yes), the flow returns to step S703, and processing is performed on the next row. When i is greater than M (S708: No), that is, when the processing of all rows is completed, the process ends.

In this way, based on the multi-identification characteristics of the spread code of the channel matrix, multi-identification filtering is performed on the channel matrix using wavelet transform, the number of channel dimensions is reduced, the main content of the channel matrix is indicated using limited channel parameters, and the final result is fed back to the transmitting side.

<Simulation result analysis>

When the rank is reduced and the main components are extracted using the eigenvalue decomposition method, the calculations are mainly centered on eigenvalue decomposition with respect to channel matrix correlation. The complexity of eigenvalue decomposition is O ($N^3$). Here, N expresses the number of dimensions of the characteristic sequence. The limited feedback algorithm based on wavelet transform reduces the rank and the number of dimensions of the characteristic waveform. Wavelet transform is linear transform, and the complexity is O (N).

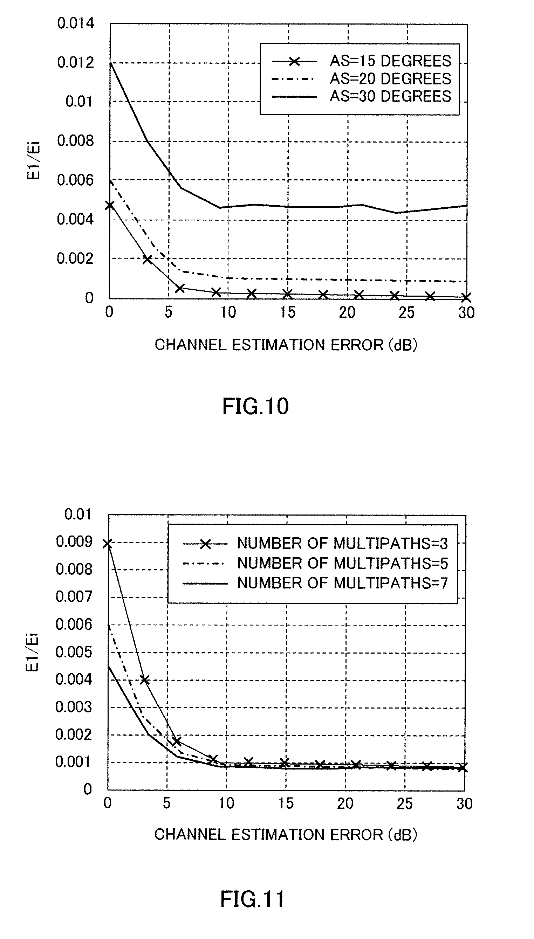

FIG. 10 and FIG.11 show the Monte Carlo simulation results of the multi-identification limited feedback method, where testing is conducted 1000 times. The array antenna having sixteen array elements and a uniform linear array of a half-wavelength interval is used. The number of multipaths is variable, and the angle spread is also variable. Further, the multi-fading of each path is independent and of the same distribution, and the center of the flux of incoming waves is in the array tangential direction. Wavelet transform is performed once using a Haar wavelet and space domain pattern, and one of the wavelet coefficient and scaling coefficient, which has a higher level of energy, is used as a channel feedback coefficient.

The horizontal axes of FIG.10 and FIG.11 indicate channel estimation errors, and the unit is dB. The vertical axes indicate the ratio between residual energy and channel parameter energy fed back by the receiving side.

FIG.10 shows the ratio between the channel residual energy and the feedback parameter energy where the number of multipaths is 5 and angle spreads are different.

FIG.11 shows the performance curve of multi-identification limited feedback, where the angle spread is 20 degrees and multipaths are different. When the delay spread is identical and the channel estimation error is relatively high, the limited feedback performance is higher for the larger number of multipaths.

As described above, according to the present embodiment, the channel parameter generation method of generating channel parameters of a multi-input multi-output channel fed back from a radio receiving apparatus to a radio transmitting apparatus, includes: a step of performing channel estimation using a signal received through the channel; a step of deriving ranks of a space domain correlation matrix and a time domain correlation matrix of the channel from a channel matrix obtained by the channel estimation; a step of obtaining the channel parameters by performing an operation of reducing a number of dimensions of columns of the estimated channel matrix when the derived rank of the space domain correlation matrix is lower than the derived rank of the time domain correlation matrix; and a step of obtaining the channel parameters by performing an operation of reducing a number of dimensions of rows of the estimated channel matrix when the derived rank of the time domain correlation matrix is lower than the derived rank of the space domain correlation matrix.

Further, steps of the method described in the present embodiment may be realized in various types of radio receiving apparatuses of a wireless communication system, such as a mobile station apparatus and base station apparatus, for example. That is, the radio receiving apparatus that generates channel parameters of a multi-input multi-output channel fed back to a radio transmitting apparatus, includes: an estimating section that performs channel estimation using a signal received through the channel; a deriving section that derives ranks of a space domain correlation matrix and a time domain correlation matrix of the channel from a channel matrix obtained by the channel estimation; and a calculating section that obtains the channel parameters by performing an operation of reducing a number of dimensions of columns of the estimated channel matrix when the derived rank of the space domain correlation matrix is lower than the derived rank of the time domain correlation matrix, and by performing an operation of reducing a number of dimensions of rows of the estimated channel matrix when the derived rank of the time domain correlation matrix is lower than the derived rank of the space domain correlation matrix.

Further, the scope of protection of the present invention is not limited to this, and modifications or substitutions that one of skill in the art can readily achieve within the technical scope disclosed in the present invention shall remain within the scope of protection of the present invention. Thus, the scope of protection of the present invention shall be based on the scope of protection of the claims.

The present application is based on Chinese Patent Application No.200510062911.8, filed on March 30, 2005, the entire content of which is expressly incorporated by reference herein.

Industrial Applicability

The limited feedback method for a multi-antenna system, the channel parameter generation method and the radio receiving apparatus according to the present invention are suitable for application to high-speed wireless communication systems, high-throughput wireless LAN systems, and the like of various cellular schemes.

**Claims**

**1.** A limited feedback method for a multi-antenna system comprising:

a step of estimating a channel matrix from a received signal;
a step of calculating a space domain correlation matrix of a channel and a rank of the space domain correlation matrix based on the channel matrix;
a step of calculating a time domain correlation matrix of the channel and a rank of the time domain correlation matrix based on the channel matrix;
a step of acquiring limited feedback output by performing wavelet transform on columns of the channel matrix when the rank of the space domain correlation matrix is lower than the rank of the time domain correlation matrix; and
a step of acquiring limited feedback output by performing wavelet transform on rows of the channel matrix when the rank of the space domain correlation matrix is higher than the rank of the time domain correlation matrix.

2.  The limited feedback method according to claim 1, wherein the step of acquiring limited feedback output by performing wavelet transform on columns of the channel matrix performs wavelet transform on each column of the channel matrix, acquires corresponding wavelet coefficient, scaling coefficient, wavelet coefficient energy and scaling coefficient energy, sets the wavelet coefficient as the limited feedback output of a vector of the column when the wavelet coefficient energy is higher than the scaling coefficient energy, and sets the scaling coefficient as the limited feedback output of the vector of the column when the wavelet coefficient energy is less than the scaling coefficient energy.

3.  The limited feedback method according to claim 1, wherein the step of acquiring limited feedback output by performing wavelet transform on rows of the channel matrix performs wavelet transform on each row of the channel matrix, acquires corresponding wavelet coefficient, scaling coefficient, wavelet coefficient energy and scaling coefficient energy, sets the wavelet coefficient as the limited feedback output of a vector of the row when the wavelet coefficient energy is higher than the scaling coefficient energy, and sets the scaling coefficient as the limited feedback output of the vector of the row when the wavelet coefficient energy is less than the scaling coefficient energy.

4.  The limited feedback method according to claim 2, wherein wavelet transform is further performed on the limited feedback output of the row and the limited feedback output of the column, and a final feedback result is acquired.

5.  The limited feedback method according to claim 4, wherein a number of times of wavelet transform is determined based on a number of given feedback parameters, an allowed channel error and a ratio between the feedback parameter and residual energy.

6.  The limited feedback method according to claim 4, wherein energy of components of the feedback output of the columns and rows is calculated, and a component having a relatively high energy is selected as the final limited feedback output, and fed back to a transmitting side.

7.  The limited feedback method according to claim 4, wherein a number of times of wavelet transform is determined based on characteristics of a code division multiple access system spread code and a number of possible multipaths in a cell.

8.  The limited feedback method according to claim 1, wherein the wavelet transform is a Haar wavelet transform.

9.  A channel parameter generation method of generating channel parameters of a multi-input multi-output channel fed back from a radio receiving apparatus to a radio transmitting apparatus, the channel parameter generation method comprising:

    a step of performing channel estimation using a signal received through the channel;
    a step of deriving ranks of a space domain correlation matrix and a time domain correlation matrix of the channel from a channel matrix obtained by the channel estimation;
    a step of obtaining the channel parameters by performing an operation of reducing a number of dimensions of columns of the estimated channel matrix when the derived rank of the space domain correlation matrix is lower than the derived rank of the time domain correlation matrix; and
    a step of obtaining the channel parameters by performing an operation of reducing a number of dimensions of rows of the estimated channel matrix when the derived rank of the time domain correlation matrix is lower than the derived rank of the space domain correlation matrix.

10. A radio receiving apparatus that generates channel parameters of a multi-input multi-output channel fed back to a radio transmitting apparatus, the radio receiving apparatus comprising:

    an estimating section that performs channel estimation using a signal received through the channel;
    a deriving section that derives ranks of a space domain correlation matrix and a time domain correlation matrix of the channel from a channel matrix obtained by the channel estimation; and
    a calculating section that obtains the channel parameters by performing an operation of reducing a number of dimensions of columns of the estimated channel matrix when the derived rank of the space domain correlation matrix is lower than the derived rank of the time domain correlation matrix, and by performing an operation of reducing a number of dimensions of rows of the estimated channel matrix when the derived rank of the time domain correlation matrix is lower than the derived rank of the space domain correlation matrix.

FIG.1

$$H \implies h_{vec} = \begin{bmatrix} h_{11} \\ h_{21} \\ \vdots \\ h_{MrM1} \end{bmatrix} \implies \boxed{\begin{array}{l} \text{VECTOR} \\ \text{QUANTIZING} \\ \text{SECTION} \end{array}} \implies \hat{h}_{vec}$$

FIG.2

S101    ESTIMATE CHANNEL

S102   SELECT PATTERN

TIME DOMAIN PATTERN

S103   PERFORM LIMITED FEEDBACK PROCESSING ACCORDING TO TIME DOMAIN PATTERN

SPACE DOMAIN PATTERN

S104   PERFORM LIMITED FEEDBACK PROCESSING ACCORDING TO SPACE DOMAIN PATTERN

FIG.3

EP 1 863 192 A1

| | i-TH FRAME | | | | | i+1-TH FRAME | |
|---|---|---|---|---|---|---|---|
| TIME SLOT 1 | TIME SLOT 2 | · · · · · | TIME SLOT $N_f$ | TIME SLOT 1 | TIME SLOT 2 | · · · · · | TIME SLOT $N_f$ |

| $N_s Q$ CHIPS | $N_m$ CHIPS | $N_s Q$ CHIPS | |
|---|---|---|---|
| $N_S$ CODES | TRAINING SEQUENCE | $N_S$ CODES | GUARD INTERVAL |

FIG.4

ESTIMATE CHANNEL MATRIX OF
USER k

S301 | ACQUIRE SPACE DOMAIN CORRELATION MATRIX $R_{k,s}$ OF CHANNEL

S302 | ACQUIRE RANK $r_{k,s}$ FROM SPACE DOMAIN CORRELATION MATRIX OF CHANNEL

S303 | ACQUIRE TIME DOMAIN CORRELATION MATRIX $R_{k,t}$ OF CHANNEL

S304 | ACQUIRE RANK $r_{k,t}$ FROM TIME DOMAIN CORRELATION MATRIX OF CHANNEL

S305 | $r_{k,s} < r_{k,t}$

NO →

S306
PERFORM LIMITED FEEDBACK PROCESSING ACCORDING TO TIME DOMAIN PATTERN

YES

S307 | PERFORM LIMITED FEEDBACK PROCESSING ACCORDING TO SPACE DOMAIN PATTERN

FIG.5

FIG.6

FIG.7A

FIG.7B

S601 | SELECT FIRST COLUMN $h_{k,1}$ OF $H_k$

S602 | $i=1$

S603 | PERFORM WAVELET TRANSFORM ON $h_{k,j}$ AND ACQUIRE WAVELET COEFFICIENT d AND SCALING COEFFICIENT c

S604 | $|c|<|d|$

NO → S605 | SET SCALING COEFFICIENT c AS LIMITED FEEDBACK OUTPUT OF FIRST COLUMN VECTOR

YES

S606 | SET WAVELET COEFFICIENT d AS LIMITED FEEDBACK OUTPUT OF FIRST COLUMN VECTOR

S607 | $i=i+1$

S608 | $i \leqq W$

YES

NO

END

FIG.8

S701 | SELECT FIRST ROW $h_{k,1}$ OF $H_k$

S702 | $i=1$

S703 | PERFORM WAVELET TRANSFORM ON $I_{k,j}$ AND ACQUIRE WAVELET COEFFICIENT d AND SCALING COEFFICIENT c

S704 | $|c| < |d|$

S705 | SET SCALING COEFFICIENT c AS LIMITED FEEDBACK OUTPUT OF FIRST ROW VECTOR

NO

YES

S706 | SET WAVELET COEFFICIENT d AS LIMITED FEEDBACK OUTPUT OF FIRST ROW VECTOR

S707 | $i=i+1$

S708 | $i \leqq M$

YES

NO

END

FIG.9

FIG.10

FIG.11

## INTERNATIONAL SEARCH REPORT

| | |
|---|---|
| | International application No. |
| | PCT/JP2006/306350 |

A. CLASSIFICATION OF SUBJECT MATTER
*H04B7/06*(2006.01), *H04J15/00*(2006.01)

According to International Patent Classification (IPC) or to both national classification and IPC

B. FIELDS SEARCHED

Minimum documentation searched (classification system followed by classification symbols)
H04B7/06, H04J15/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2002/082689 A2   (MOTOROLA, INC.), 17 October, 2002 (17.10.02), Full text; Figs. 1 to 10 & JP 2005-509316 A       & US 2003/0185309 A1 & EP 1384335 A2 | 1-10 |
| A | WO 2004/059876 A1  (Matsushita Electric Industrial Co., Ltd.), 15 July, 2004 (15.07.04), Full text; Figs. 1 to 33 & EP 1578032 A1 | 1-10 |
| A | JP 2005-039840 A  (Lucent Technologies Inc.), 10 February, 2005 (10.02.05), Full text; Figs. 1 to 3 & US 2005/0020237 A1    & EP 1499056 A1 | 1-10 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 May, 2006 (30.05.06) | 06 June, 2006 (06.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200510062911

**Non-patent literature cited in the description**

- **T. S. RAPPAPORT ; A. ANNAMALAI ; R. M. BUEHRER ; W. H. TRANTER.** Wireless communications: past events and a future perspective. *IEEE Commun. Mag.,* May 2002, vol. 40 (5), 148-161
- **R. THOMAS DERRYBERRY ; STEVEN D. GRAY ; D. MIHAI IONESCU ; GIRIDHAR MANDYAM ; BALAJI RAGHOTHAMAN.** Transmit Diversity in 3G CDMA Systems. *IEEE Commun. Mag.,* April 2002, vol. 40, 68-75
- **DAVID. J. LOVE ; ROBERT. W. HEATH, JR. ; W. SANTIPACH ; MICHAEL. L. HONIG.** What is the value of limited feedback for MIMO channels. *IEEE Commun. Mag.,* October 2004, vol. 42 (1), 54-59
- **DAVID. J. LOVE ; ROBERT. W. HEATH, JR. ; T. STROHMER.** Grassmannian Beamforming for Multiple-Input Multiple-Output Wireless Systems. *IEEE Trans. Info. Theory,* October 2003, vol. 49, 2735-45
- **KRISHNA KIRAN. MUKKAVILLI ; ASHUTOSH SABHARWAL ; ELZA ERKIP ; BEHNAAM AAZHANG.** On Beam forming with Finite Rate Feedback in Multiple-Antenna Systems. *IEEE Trans. Info. Theory,* October 2003, vol. 49, 2562-79

- **D. J. LOVE ; R. W. HEATH, JR.** Limited Feedback Unitary Precoding for Orthogonal Space-Time Block Codes. *IEEE Trans. Signal Processing, http://dynamo.ecn.purdue.edu/-djlove/papers/paper4.p df*
- **D. J. LOVE ; R. W. HEATH, JR.** Grassmannian Precoding for Spatial Multiplexing Systems. *Proc. Allerton Conf. Commun., Control, and Comp.,* October 2003
- **G. S. RAJAPPAN ; M. L. HONIG.** Signature Sequence Adaptation for DS-CDMA with Multipath. *IEEE JSAC,* 20 February 2002, 84-95
- **MONICA NICOLI ; MIKAEL STERNAD ; UMBERTO SPAGNOLINI ; ANDERS AHLEN.** Reduced-rank Channel Estimation and Tracking in Time-Slotted CDMA System. *Proc. Of ICC,* 533-537
- **S. JENG ; G. T. OKAMOTO ; G.UANGHAN XU ; HUI. LIU ; J. VOGEL.** Experimental evaluation of smart antenna systems for wireless communications. *IEEE trans. on AP,* 1998, vol. 46 (6), 749-757
- **J. ANDERSON ; S. RAPPAPORT ; S. YOSHIDA.** Propagation measurements and model for wireless communications. *IEEE Comm. Magazine,* 1995, vol. 33 (1), 42-49